# EUROPÄISCHE PATENTSCHRIFT

(11) **EP 1 510 334 B1**
(45) Veröffentlichungstag und Bekanntmachung des Hinweises auf die Patenterteilung: **28.09.2005**
(21) Anmeldenummer: 03018909.6
(22) Anmeldetag: 20.08.2003
(51) Int. Cl.: B32B 23/10, B32B 23/02, D04H 13/00

(54) **Faserlaminat und Verfahren zur Herstellung eines Faserlaminates**
Fiber laminate and method of producing a fiber laminate
Laminé fibreux et préparation d'un laminé fibreux

(43) Veröffentlichungstag der Anmeldung: 02.03.2005
(73) Patentinhaber: Reifenhäuser GmbH & Co. Maschinenfabrik, 53839 Troisdorf (DE)
(72) Erfinder: Sommer, Sebastian, 53844 Troisdorf (DE); Kunze, Bernd, Dr., 53773 Hennef (DE)
(74) Vertreter: Rohmann, Michael

(56) Entgegenhaltungen:
- EP-A- 0 577 156
- WO-A-94/19179
- WO-A-98/24618
- DE-A- 10 135 111

## Beschreibung

Die Erfindung betrifft ein Faserlaminat, insbesondere ein saugfähiges Wischtuch aus zumindest einer Schicht aus einem Spinnvlies und zumindest einer Schicht aus hydrophilen Fasern. Die Erfindung betrifft fernerhin ein Verfahren zur Herstellung eines solchen Faserlaminates. - Mit dem Begriff Faserlaminat ist ein Mehrschichtprodukt bzw. ein Laminat aus mehreren Faserschichten gemeint. Das Spinnvlies besteht aus Filamenten. Mit dem Begriff Filamente sind Endlosfasern gemeint, d. h. theoretisch unendlich lange Fäden, aus denen das Spinnvlies gebildet wird. Filamente meint im Rahmen der Erfindung insbesondere Filamente aus einem thermoplastischen Kunststoff.

Aus der Praxis ist ein Verfahren bekannt, mit dem saugfähige textile Gebilde, die auch als Wischtuch bezeichnet werden, erzeugt werden. Dabei werden Fasern aus einem thermoplastischen Kunststoff mit hydrophilen bzw. wasseraufnahmefähigen Fasern gemischt. Bei den ersten Fasern kann es sich beispielsweise um Filamente bzw. Fasern aus Polypropylen oder aus Polyethylenterephthalat (PET) handeln. Bei den zweiten hydrophilen Fasern handelt es sich beispielsweise um Zellulosefasern. Das Fasergemisch wird im Rahmen der bekannten Maßnahmen kardiert und anschließend wasserstrahlvernadelt bzw. hydrodynamisch verfestigt. Die mit diesem bekannten Verfahren hergestellten Wischtücher weisen nur eine relativ geringe Elastizität auf. Nach einer Deformation des Wischtuches treten kaum elastische Rückstellkräfte auf und es kommt normalerweise zu keiner nennenswerten Rückstellung. Im Übrigen zeigen diese bekannten Wischtücher im Hinblick auf ihre Flüssigkeitsdurchlässigkeit bzw. Flüssigkeitsaufnahmefähigkeit stets ein symmetrisches Verhalten. D. h. die genannten Eigenschaften sind nach beiden Seiten, d. h. zur Oberseite hin und zur Unterseite des Wischtuches hin identisch. Das ist aber nicht immer erwünscht.

Demgegenüber liegt der Erfindung das technische Problem zugrunde, ein Faserlaminat, insbesondere ein Wischtuch anzugeben, das hervorragende elastische Eigenschaften aufweist und das bei Bedarf im Hinblick auf die Flüssigkeitsdurchlässigkeit bzw. -aufnahmefähigkeit auch asymmetrisch ausgebildet werden kann. Der Erfindung liegt fernerhin das technische Problem zugrunde, ein Verfahren zur Herstellung eines solchen Faserlaminates anzugeben.

Zur Lösung des technischen Problem lehrt die Erfindung ein Faserlaminat, insbesondere ein saugfähiges Wischtuch, wobei zumindest eine Schicht aus einem Spinnvlies und zumindest eine Schicht aus Meltblown-Fasern vorgesehen ist,
wobei zumindest eine Schicht aus hydrophilen Fasern vorhanden ist
und wobei ein Teil der Meltblown-Fasern auch in der Schicht aus dem Spinnvlies und/oder in der Schicht aus den hydrophilen Fasern verteilt ist.

Ein erfindungsgemäß eingesetztes Spinnvlies besteht aus Filamenten und wird zweckmäßigerweise mit Hilfe eines Spunbond-Verfahrens hergestellt. Es liegt im Rahmen der Erfindung, dass es sich bei den Meltblown-Fasern um Endlos-Meltblown-Fasern handelt. Hydrophile Fasern meint im Rahmen der Erfindung wasseraufnahmefähige Fasern. Als hydrophile Fasern können insbesondere Zellulosefasern, wie beispielsweise Pulpfasern oder Viskosefasern eingesetzt werden. Die Schicht aus den hydrophilen Fasern bildet eine saugfähige Schicht in dem erfindungsgemäßen Faserlaminat. Dass ein Teil der Meltblown-Fasern auch in der Schicht aus dem Spinnvlies und/oder in der Schicht aus den hydrophilen Fasern verteilt ist, meint im Rahmen der Erfindung, dass zumindest ein Teil der Meltblown-Fasern in die Zwischenräume zumindest einer der genannten Schichten gelangt ist. Wie weiter unten noch dargelegt wird, werden die Meltblown-Fasern vorzugsweise im Zuge der Verfestigung bzw. der hydrodynamischen Verfestigung des Schichtenaggregates in die genannten Schichten überführt.

Wenn nachfolgend bevorzugte Schichten des erfindungsgemäßen Faserlaminates beschrieben werden, handelt es sich bei der jeweils obersten Schicht des Faserlaminates auch um die Schicht, die bei der weiteren Bearbeitung bzw. Behandlung des Faserlaminates nach oben orientiert ist. Wird also das Faserlaminat einer von oben einwirkenden Wasserstrahlverfestigung unterzogen, so wird die genannte oberste Schicht auch als erste Schicht von den Wasserstrahlen beaufschlagt. - Es liegt im Rahmen der Erfindung, dass die Schicht aus den Meltblown-Fasern auf der Schicht aus dem Spinnvlies angeordnet ist und die Schicht aus den hydrophilen Fasern auf der Schicht aus den Meltblown-Fasern aufgebracht ist. Zweckmäßigerweise liegt dabei die Schicht aus den Meltblown-Fasern unmittelbar auf der Schicht aus dem Spinnvlies und vorzugsweise liegt die Schicht aus den hydrophilen Fasern unmittelbar auf der Schicht aus den Meltblown-Fasern. Nach einer besonderen Ausführungsform der Erfindung kann auf die Schicht aus den hydrophilen Fasern eine zweite Schicht aus Meltblown-Fasern aufgebracht werden. - Nach einer sehr bevorzugten Ausführungsform der Erfindung wird eine weitere Schicht aus einem Spinnvlies auf der Schicht aus den hydrophilen Fasern angeordnet. Wenn diese Schicht aus dem Spinnvlies unmittelbar auf der Schicht aus den hydrophilen Fasern aufgebracht ist, handelt es sich um ein Faserlaminat mit asymmetrischem Verhalten (Spinnvlies/Meltblown-Faserschicht/hydrophile Faserschicht/Spinnvlies). D. h. die Flüssigkeitsdurchlässigkeit bzw. Flüssigkeitsaufnahmefähigkeit ist zu beiden Seiten (Oberseite und Unterseite) des Faserlaminates unterschiedlich. Der Erfindung liegt dabei die Erkenntnis zugrunde, dass die Schicht aus den Meltblown-Fasern, die lediglich einer Spinnvliesschicht benachbart ist, die Flüssigkeitsdurchlässigkeit behindert bzw. einschränkt. Dieses asymmetrische Verhalten eines solchen Faserlaminates ist in manchen Fällen erwünscht. - Es liegt aber auch im Rahmen der Erfindung, dass die weitere Schicht aus dem Spinnvlies unter Zwischenschaltung einer weiteren Schicht aus Meltblown-Fasern auf der Schicht aus den hydrophilen Fasern angeordnet wird. Dann erhält man ein Faserlaminat mit symmetrischem Verhalten (Spinnvlies/Meltblown-Faserschicht /hydrophile Faserschicht/Meltblown-Faserschicht/Spinnvlies). Die Flüssigkeitsdurchlässigkeit bzw. Flüssigkeitsaufnahmefähigkeit ist dann zu beiden Seiten (Oberseite und Unterseite) des Faserlaminates hin identisch oder zumindest sehr ähnlich.

Nach einer anderen Ausführungsform der Erfindung besteht das Faserlaminat aus einer ersten Schicht aus einem Spinnvlies und einer darauf unmittelbar aufgebrachten Schicht aus hydrophilen Fasern. An diese Schicht aus hydrophilen Fasern schließt die Schicht aus Meltblown-Fasern an. Auf diese letzte Schicht aus Meltblown-Fasern kann noch eine zweite Schicht aus einem Spinnvlies aufgebracht werden.

Es liegt im Rahmen der Erfindung, dass die eingesetzten Meltblown-Fasern aus zumindest einem Elastomeren bestehen. Bei einem Elastomeren handelt es sich um einen bei Raumtemperatur kautschukelastischen Stoff bzw. Kunststoff. Es werden also elastische Meltblown-Fasern verwendet. Nach besonders bevorzugter Ausführungsform bestehen die elastischen Meltblown-Fasern aus zumindest einem Elastomeren aus der Gruppe "Polyurethan, Ethylen-Propylen-Dien-Mischpolymerisat (EPDM)". Es liegt im Rahmen der Erfindung, dass ein erfindungsgemäßes Faserlaminat 3 bis 15 Gew.%, vorzugsweise 5 bis 10 Gew.% Meltblown-Fasern enthält.

Zur Lösung des technischen Problems lehrt die Erfindung weiterhin ein Verfahren zur Herstellung eines Faserlaminates, insbesondere eines saugfähigen Wischtuches,
wobei zumindest eine Schicht aus einem Spinnvlies aus Filamenten gebildet wird,
wobei zumindest eine Schicht aus Meltblown-Fasern aufgebracht wird und
wobei zusätzlich zumindest eine Schicht aus hydrophilen Fasern aufgebracht wird und
wobei das resultierende Schichtenaggregat zum Faserlaminat verfestigt wird und zwar mit der Maßgabe verfestigt wird, dass Meltblown-Fasern aus der Meltblown-Faserschicht in zumindest eine benachbarte Schicht aus dem Spinnvlies und/oder aus den hydrophilen Fasern eindringen. Es liegt im Rahmen der Erfindung, dass bei der Verfestigung Meltblown-Fasern nur an einer Seite (Oberseite oder zweckmäßigerweise Unterseite) der Meltblown-Faserschicht in zumindest eine benachbarte Schicht überführt werden. Auf jeden Fall werden Meltblown-Fasern dabei in die an dieser Seite der Meltblown-Faserschicht unmittelbar benachbarte Schicht überführt. Vorzugsweise handelt es sich bei dieser unmittelbar benachbarten Schicht um eine Spinnvliesschicht.

Es liegt im Rahmen der Erfindung, dass zumindest ein Teil der Schichten des Faserlaminates vorverfestigt wird. Nach einer Ausführungsform kann lediglich die Schicht aus dem Spinnvlies vorverfestigt werden. Nach einer anderen Ausführungsform wird das Aggregat aus der Spinnvliesschicht und der Meltblown-Faserschicht vorverfestigt. Die Vorverfestigung kann also vor Aufbringen der Schicht aus den Meltblown-Fasern erfolgen oder nach dem Aufbringen dieser Meltblown-Faserschicht. Die Vorverfestigung wird beispielsweise mit Hilfe eines Kalanders durchgeführt. Das Aufbringen der hydrophilen Fasern erfolgt zweckmäßigerweise mit Hilfe einer Karde und/oder mit Hilfe einer Air-laid-Einrichtung.

Nach der Kombination der Schichten wird das resultierende Schichtenaggregat zum Faserlaminat verfestigt. Mit dem Begriff Verfestigung ist hier die Endverfestigung gemeint. Nach sehr bevorzugter Ausführungsform der Erfindung wird das Schichtenaggregat hydrodynamisch verfestigt. Dabei liegt es im Rahmen der Erfindung, dass das Faserlaminat durch Wasserstrahlbehandlung hydrodynamisch verfestigt wird. Bei einer solchen Wasserstrahlverfestigung bzw. Wasserstrahlvernadelung verfestigen feine, sehr schnelle Wasserstrahlen bzw. Hochdruckwasserstrahlen das Faserlaminat. Durch diese hydrodynamische Verfestigung werden Meltblown-Fasern aus der Meltblown-Faserschicht gedrückt bzw. geschoben und zwar in die benachbarte Schicht. Das hat zur Folge, dass ein Teil der Meltblown-Fasern nach der Verfestigung bzw. Endverfestigung in zumindest einer der Meltblown-Faserschicht benachbarten Schicht vorhanden sind.

Bei der normalen Herstellung von Spinnvliesen bzw. Vlieslaminaten mit üblichen Rohstoffen wie Polyolefinen und Polyestern können elastische Produkte bzw. Produkte mit elastischen Rückstelleigenschaften nicht ohne weiteres hergestellt werden. Der Erfindung liegt dagegen die Erkenntnis zugrunde, dass bei einem erfindungsgemäßen Faserlaminat auf einfache Weise elastische Eigenschaften eingestellt werden können, in dem auf erfindungsgemäße Weise Meltblown-Fasern bzw. elastische Meltblown-Fasern in das Laminat eingebracht werden. Den elastischen Eigenschaften des Faserlaminates kommt im Rahmen der Erfindung ganz besondere Bedeutung zu. Erfindungsgemäß kann ein saugfähiges bzw. wasseraufnahmefähiges Wischtuch hergestellt werden, dass sich zudem durch eine hervorragende Elastizität auszeichnet. Die Elastizität wird dabei mit Hilfe der in das Faserlaminat eingebrachten Meltblown-Fasern erzielt wird. Wie oben bereits dargelegt, können bei einem erfindungsgemäßen Faserlaminat in vorteilhafter Weise nach Bedarf symmetrische oder asymmetrische Eigenschaften im Hinblick auf die Flüssigkeitsdurchlässigkeit bzw. Flüssigkeitsaufnahmefähigkeit eingestellt werden.

Nachfolgend wird die Erfindung anhand einer lediglich ein Ausführungsbeispiel darstellenden Zeichnung näher erläutert. Es zeigen in schematischer Darstellung:
- Fig. 1: einen Schnitt durch ein erfindungsgemäßes Faserlaminat mit asymmetrischen Eigenschaften und
- Fig. 2: den Gegenstand nach Fig. 1 mit symmetrischen Eigenschaften.

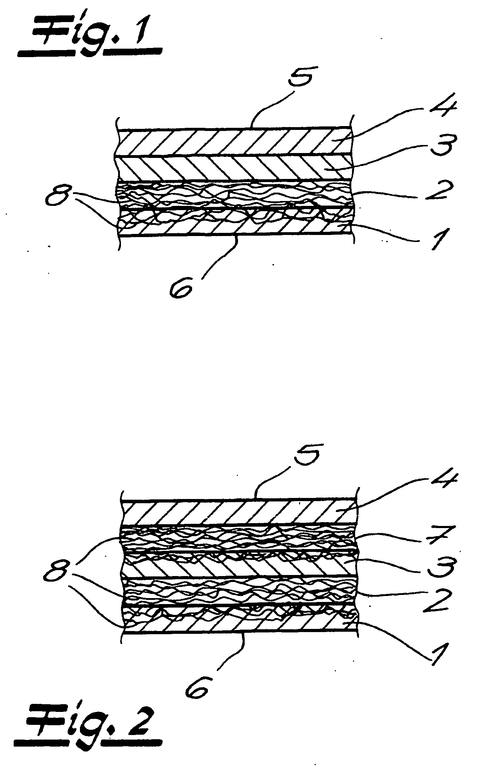

Das in Fig. 1 dargestellte Faserlaminat besteht aus einer ersten Schicht 1 aus einem Spinnvlies aus Filamenten. Darauf ist unmittelbar eine erste Schicht 2 aus Meltblown-Fasern 8 aufgebracht. An diese Schicht 2 aus Meltblown-Fasern 8 schließt eine Schicht 3 aus hydrophilen Fasern an. Auf diese Schicht 3 ist eine zweite Schicht 4 aus einem Spinnvlies aufgebracht. Dieses Faserlaminat zeigt im Hinblick auf die Wasserdurchlässigkeit bzw. Wasseraufnahmefähigkeit ein asymmetrisches Verhalten. Das bedeutet, dass die Wasserdurchlässigkeit bzw. -aufnahmefähigkeit bezüglich der Oberseite 5 und bezüglich der Unterseite 6 des Faserlaminates unterschiedlich ist.

Bei dem Faserlaminat in Fig. 2 handelt es sich dagegen um ein symmetrisches Faserlaminat. Hier befindet sich auf der Schicht 3 aus den hydrophilen Fasern noch eine zweite Schicht 7 aus Meltblown-Fasern 8. Auf diese letztgenannte Schicht 7 ist die zweite Schicht 4 aus dem Spinnvlies aufgebracht.

In den Fig. 1 und 2 ist im Übrigen angedeutet worden, dass sich Meltblown-Fasern 8 in Zwischenräumen der Schicht 1 aus dem Spinnvlies befinden und in Fig. 2 auch in Zwischenräumen der Schicht 3 aus den hydrophilen Fasern befinden. Diese Meltblown-Fasern 8 stammen aus der darüber angeordneten Schicht 2 bzw. 7 aus Meltblown-Fasern 8. Im Zuge der Herstellung des in den Fig. 1 und 2 dargestellten Faserlaminates wurden bei der hydrodynamischen Verfestigung Meltblown-Fasern 8 in die Schicht 1 bzw. 3 eingeschoben bzw. gedrückt. Nach bevorzugter Ausführungsform der Erfindung enthält die Schicht 1 aus dem Spinnvlies und/oder die Schicht 3 aus den hydrophilen Fasern mehr als 1 Gew.%, vorzugsweise mehr als 2 Gew.% an Meltblown-Fasern 8 (Gew.%-Angaben lediglich auf die Schicht 1 aus dem Spinnvlies bzw. auf die Schicht 3 aus den hydrophilen Fasern bezogen).

## Patentansprüche

1. Faserlaminat, insbesondere saugfähiges Wischtuch,
wobei zumindest eine Schicht (1) aus einem Spinnvlies und zumindest eine Schicht (2) aus Meltblown-Fasern (8) vorgesehen ist,
wobei zumindest eine Schicht (3) aus hydrophilen Fasern vorhanden ist und
wobei ein Teil der Meltblown-Fasern (8) auch in der Schicht (1) aus dem Spinnvlies und/oder in der Schicht (3) aus den hydrophilen Fasern verteilt ist.

2. Faserlaminat nach Anspruch 1, wobei die Schicht (2) aus den Meltblown-Fasern auf der Schicht (1) aus dem Spinnvlies angeordnet ist und die Schicht (3) aus den hydrophilen Fasern auf der Schicht (2) aus dem Meltblown-Fasern aufgebracht ist.

3. Faserlaminat nach Anspruch 2, wobei zumindest eine weitere Schicht (4) aus einem Spinnvlies auf der Schicht (3) aus den hydrophilen Fasern angeordnet ist.

4. Faserlaminat nach einem der Ansprüche 1 bis 3, wobei die Meltblown-Fasern aus zumindest einem Elastomeren bestehen.

5. Faserlaminat nach einem der Ansprüche 1 bis 4, wobei die Meltblown-Fasern aus zumindest einem Elastomeren aus der Gruppe "Polyurethan, EPDM" bestehen.

6. Verfahren zur Herstellung eines Faserlaminates, insbesondere eines saugfähigen Wischtuches,
wobei zumindest eine Schicht (1) aus einem Spinnvlies gebildet wird,
wobei zumindest eine Schicht (2) aus Meltblown-Fasern (8) aufgebracht wird,
wobei zusätzlich zumindest eine Schicht (3) aus hydrophilen Fasern aufgebracht wird
und wobei das Schichtenaggregat zum Faserlaminat verfestigt wird und zwar mit der Maßgabe verfestigt wird, dass Meltblown-Fasern aus der Meltblown-Faserschicht (2) in zumindest eine der Meltblown-Faserschicht benachbarte Schicht eindringen.

7. Verfahren nach Anspruch 6, wobei zumindest ein Teil der Schichten (1, 2) vorverfestigt wird.

8. Verfahren nach einem der Ansprüche 1 bis 7, wobei das Schichtenaggregat hydrodynamisch verfestigt wird.

## Claims

1. Fibre laminate, in particular absorbent wiping cloth,
wherein there is at least one layer (1) of a spunbonded web and at least one layer (2) of meltblown fibres (8),
wherein there is at least one layer (3) of hydrophilic fibres, and
wherein some of the meltblown fibres (8) are also distributed in the layer (1) of the spunbonded web and/or in the layer (3) of hydrophilic fibres.

2. Fibre laminate according to Claim 1, wherein the layer (2) of meltblown fibres is arranged on the layer (1) of the spunbonded web and the layer (3) of hydrophilic fibres is applied to the layer (2) of meltblown fibres.

3. Fibre laminate according to Claim 2, wherein at least one further layer (4) of a spunbonded web is applied to the layer (3) of hydrophilic fibres.

4. Fibre laminate according to one of Claims 1 to 3, wherein the meltblown fibres consist of at least one elastomer.

5. Fibre laminate according to one of Claims 1 to 4, wherein the meltblown fibres consist of at least one elastomer from the group "polyurethane, EPDM".

6. Method of producing a fibre laminate, in particular an absorbent wiping cloth,
wherein at least one layer (1) of a spunbonded web is formed,
wherein at least one layer (2) of meltblown fibres (8) is applied,
wherein additionally at least one layer (3) of hydrophilic fibres is applied,
and wherein the layer aggregate is consolidated to form the fibre laminate and namely is consolidated with the proviso that meltblown fibres from the meltblown fibre layer (2) penetrate into at least one layer adjacent to the meltblown fibre layer.

7. Method according to Claim 6, wherein at least some of the layers (1, 2) are pre-consolidated.

8. Method according to one of Claims 1 to 7, wherein the layer aggregate is hydrodynamically consolidated.

## Revendications

1. Stratifié de fibres, en particulier serpillière absorbante,
dans lequel sont prévues au moins une couche (1) d'un non-tissé et au moins une couche (2) de fibres meltblown (8),
dans lequel est présente au moins une couche (3) de fibres hydrophiles et
dans lequel une partie des fibres meltblown (8) est également répartie dans la couche (1) du non-tissé et/ou dans la couche (3) des fibres hydrophiles.

2. Stratifié de fibres suivant la revendication 1, dans lequel la couche (2) de fibres meltblown est disposée sur la couche (1) du non-tissé et la couche (3) des fibres hydrophiles est appliquée sur la couche (2) des fibres meltblown.

3. Stratifié de fibres suivant la revendication 2, dans lequel au moins une autre couche (4) d'un non-tissé est disposée sur la couche (3) des fibres hydrophiles.

4. Stratifié de fibres suivant l'une des revendications 1 à 3, dans lequel les fibres meltblown se composent d'au moins un élastomère.

5. Stratifié de fibres suivant l'une des revendications 1 à 4, dans lequel les fibres meltblown se composent d'au moins un élastomère du groupe « polyuréthanne, EPDM (copolymère d'éthylène - propylène - diène) ».

6. Procédé de fabrication d'un stratifié de fibres, en particulier d'une serpillière absorbante,
dans lequel au moins une couche (1) est formée d'un non-tissé,
dans lequel au moins une couche (2) de fibres meltblown (8) est appliquée,
dans lequel au moins une couche (3) de fibres hydrophiles est appliquée en supplément,
et dans lequel l'agrégat de couches est consolidé en stratifié de fibres, à savoir de telle sorte que des fibres meltblown de la couche de fibres meltblown (2) pénètrent dans au moins une couche voisine de la couche de fibres meltblown.

7. Procédé suivant la revendication 6, dans lequel au moins une partie des couches (1, 2) est pré-consolidée.

8. Procédé suivant l'une des revendications 1 à 7, dans lequel l'agrégat de couches est consolidé par voie hydrodynamique.
